# EUROPÄISCHE PATENTSCHRIFT

(11) **EP 1 288 034 B1**
(45) Veröffentlichungstag und Bekanntmachung des Hinweises auf die Patenterteilung: **06.10.2004**
(21) Anmeldenummer: 02015740.0
(22) Anmeldetag: 13.07.2002
(51) Int. Cl.: B60H 1/34

(54) **Luftausströmeinrichtung für Fahrzeugsäule**
Air conduction nozzle for vehicule pillar
Buse d'aération pour montant de véhicule

(30) Priorität: 04.09.2001 DE 10143262
(43) Veröffentlichungstag der Anmeldung: 05.03.2003
(73) Patentinhaber: Dr.Ing. h.c.F. Porsche Aktiengesellschaft, 70435 Stuttgart (DE)
(72) Erfinder: Luik, Klaus, 75417 Mühlacker (DE); Benkler, Olaf, 75242 Neuhausen/Hamberg (DE)

(56) Entgegenhaltungen:
- EP-A- 0 630 773
- EP-A- 0 888 916
- WO-A-02/36372
- DE-A- 4 327 265
- FR-A- 2 775 221

## Beschreibung

Die Erfindung bezieht sich auf eine Luftausströmeinrichtung mit einer Luftzuführung in einen Innenraum eines Kraftfahrzeugs nach dem Oberbegriff des Patentanspruchs 1.

Aus der DE 43 27 265 C2 ist eine Seitendüse zur Innenraumbelüftung eines Fahrzeugs bekannt, die in einem Gehäuse relativ zueinander schwenkbare Quer- und Längslamellen im Düseneintrittsbereich umfaßt. Im Gehäuse ist eine schwenkbar gelagerte, luftmengenregulierende Klappe vorgesehen, die im horizontal ausgerichteten Luftkanal in einer Schließstellung vertikal angeordnet ist. Aus der EP-A-0 888 916 ist ein Lamellensystem für Belüftungseinrichtungen zur Regelung des Luftstroms, insbesondere für Belüftungen in Kraftfahrzeugen bekannt. Das Lamellensystem umfasst mehrere miteinander bewegungsgekoppelte Lamellen, die durch Betätigung eines vorzugsweise manuellen Stellelements zum Öffnen und Schließen eines Luftkanals bewegbar sind, wobei die Lamellen mit dem Stellelement über einen Zapfen, der in eine durch Betätigung des Stellelements bewegbaren Führungsnut eingreift, in Wirkungsverbindung stehen, und die Führungsnut an einem Schwenkhebel ausgebildet ist, welcher mittels des Stellelements bewegbar ist. Des Weiteren ist aus der FR-A- 2,775 221 eine Belüftungseinrichtung mit Lamellen bekannt, die senkrecht und waagerecht in einem Gehäuse angeordnet sind.

Aufgabe der Erfindung ist es, eine verbesserte Luftausströmeinrichtung mit einer Luftzuführung in einen Innenraum eines Kraftfahrzeugs zu schaffen, die eine gezielte Luftzuführung in den Innenraum ermöglicht und kleinbauend in einer Fahrzeugsäule anzuordnen und in einfacher Weise in eine Säulenverkleidung einsetzbar und zu befestigen ist. Diese Aufgabe wird erfindungsgemäß durch die Merkmale des Patentanspruchs 1 gelöst. Weitere vorteilhafte Merkmale beinhalten die Unteransprüche.

Mit der Luftausströmeinrichtung wird eine gezielte Luftzuführung in den Innenraum des Fahrzeugs auch bei einer Schließstellung erzielt, derart, daß über eine Luftklappe im Luftführungsgehäuse, die den Innenraum zuzuführende Luft entsprechend einer Öffnungsund Schließstellung sowie einer halbgeöffnete Stellung regulierbar ist. Hierzu weist das Gehäuse einen vertikal ausgerichteten Luftleitkanal in der Fahrzeugsäule auf. Dieser besteht aus einem ersten unteren Kanalabschnitt mit einer durch ein Bedienelement um eine Lagerachse in eine horizontale Schließstellung und vertikale Öffnungsstellung und in eine Zwischenstellung verschwenkbaren Verstellklappe. An diesen ersten Kanalabschnitt schließt sich ein zweiter oberer Kanalabschnitt mit den integrierten Luftleitlamellen an. Eine Verstellklappe im unteren Kanalabschnitt ist über einen mit einer Kurbel der Klappe verbundenen und am Gehäuse in einem Lager schwenkbaren Umlenkbügel mittels des Bedienelements betätigbar.

Über die Stellungen der Luftleitlamellen wird der Luftstrom richtungsmäßig gesteuert, wobei die vertikal angestellten Luftleitlamellen sich aus in einer senkrechten Fahrzeugquerebene angeordneten ersten Lamelleneinheit und um etwa 90° versetzt hierzu in einer vertikalen Fahrzeuglängsebene angeordneten zweiten Lamelleneinheit zusammensetzt. Über ein Stellelement werden alle Lamellen gemeinsam in eine Öffnungsstellung bewegt und in einer Schließstellung nimmt die erste Lamelleneinheit eine Öffnungsstellung ein und die zweiten Lamelleneinheit ist dann geschlossen.

Hierdurch wird es möglich, daß bei einer Schließstellung der vertikal ausgerichteten Luftleitlamellen beispielsweise eine Anströmung der Seitenscheibe des Fahrzeugs erfolgen kann, aber die weiteren Luftleitlamellen, welche unmittelbar in Querrichtung des Fahrzeugs angeordnet sind, eine Schließstellung aufweisen.

Insbesondere weist die erste Lamelleneinheit eine einzelne feststehende Lamelle in einer Öffnungsstellung auf, die unmittelbar benachbart einer Gehäusewand der Luftaustrittsöffnung angeordnet ist und bei einer Öffnungs- und Schließstellung nicht ansteuerbar ist. Hierdurch wird in jeder Stellung der vertikalen Luftleitlamellen eine Anströmung der Seitenscheiben erzielt.

Das Bedienelement für die Verstellklappe wird über eine Zapfen/Gabelverbindung mit dem Umlenkbügel verbunden und dieser ist um seine Achse zur Betätigung der Klappe in mindestens drei Stellungen, wie in eine Öffnungsstellung, in eine geschlossene Stellung und in eine Mittelstellung verstellbar. Das Bedienelement ist zur Fixierung dieser Stellungen an seiner Unterseite mit einem federbelasteten Hülsenelement versehen, das in Rastnuten am Gehäuse entsprechend dieser Stellungen klemmend eingreift.

Hierdurch wird in vorteilhafter Weise erreicht, daß der vertikal ausgerichtete Luftkanal, gebildet durch das Gehäuse entsprechend der Klappenstellung eine Luftzufuhr in den Innenraum steuerbar ist, wobei die einzelnen Stellungen der Klappe über die Rastnuten als sogenannte Raststellungen ausgeführt sind.

Zum einfachen Befestigen des Gehäuses in der Verkleidung der Fahrzeugsäule sind an vertikalen Rändern des Gehäuses mehrere Rasthaken vorgesehen, die zwischen sich den Rand der Verkleidung aufnehmen. Desweiteren ist zusätzlich kopfseitig des Gehäuses eine Sperrfeder in einer Gehäuseaufnahme eingeklemmt gehalten, welche sich mit einem Schenkel an einem Rand der Verkleidung abstützt, der gegenüberliegend von einem Rand des Gehäuses übergriffen wird.

Da sich das Gehäuse und somit der Luftkanal vertikal in der Fahrzeugsäule erstreckt, ist nur ein geringer Bauraum in Querrichtung erforderlich und der schon vorhandene Bauraum in vertikaler Richtung ist voll ausnutzbar.

Zur Beleuchtung des Bedienelements für die Luftklappe, welche beispielsweise als Rändelrad ausgeführt ist, ist in der Lagerachse des Bedienelements eine Aufnahme für eine Leuchtdiode vorgesehen, die einen Lichtstrahl von innen nach außen auf das Bedienelement bewirkt.

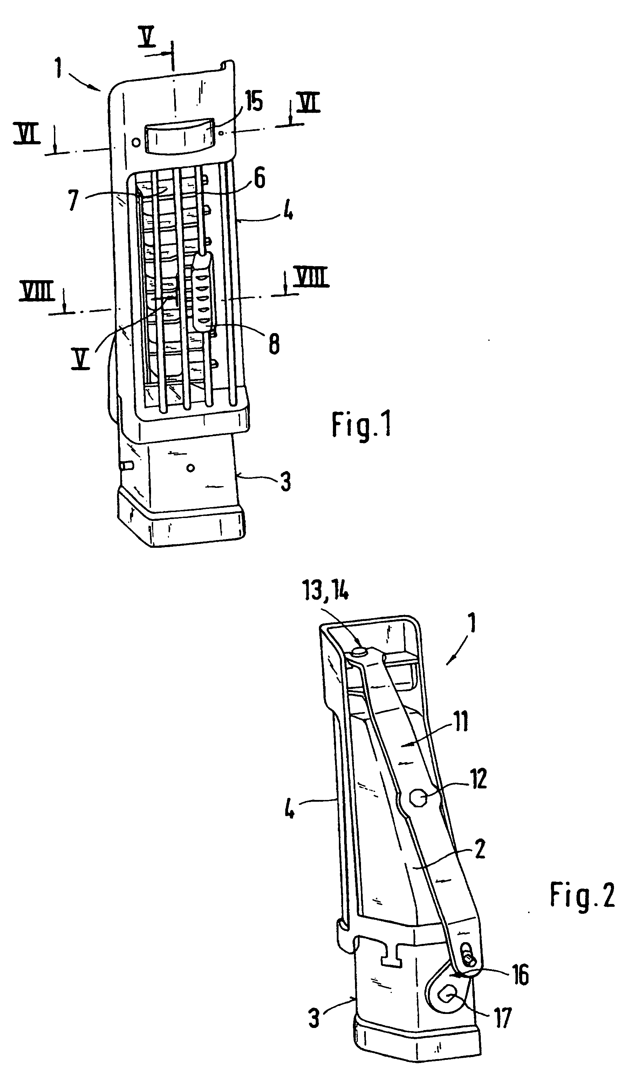

Ein Ausführungsbeispiel der Erfindung ist in den Zeichnungen dargestellt und wird im folgenden näher beschrieben.
Es zeigen
- Fig. 1: eine Vorderansicht auf die Luftausströmeinrichtung im ausgebauten Zustand,
- Fig. 2: eine Rückansicht auf die Luftausströmeinrichtung mit schwenkbarem Umlenkbügel,

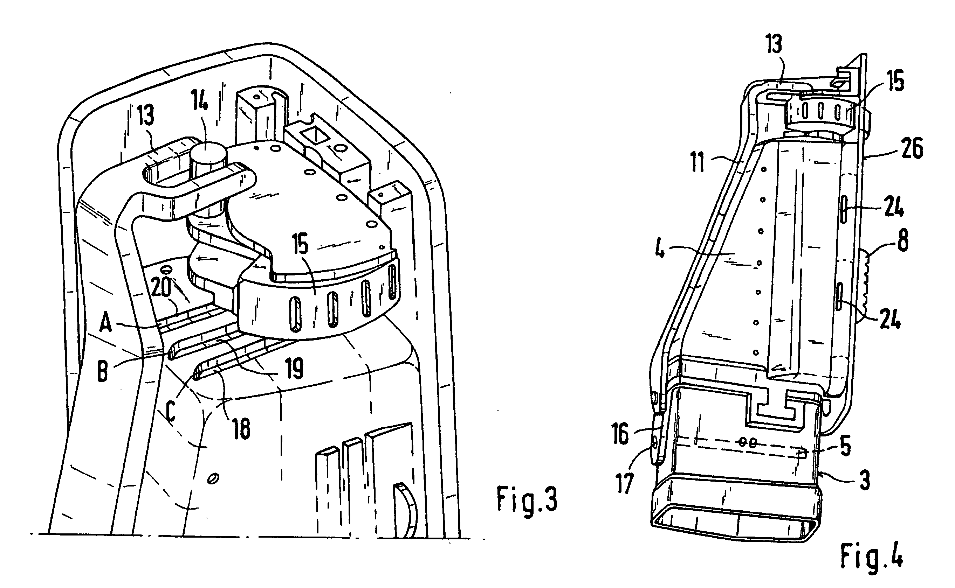

- Fig. 3: eine Ansicht auf das Bedienelement mit teilweise dargestelltem Umlenkbügel,
- Fig. 4: eine Seitenansicht auf die Luftausströmeinrichtung,

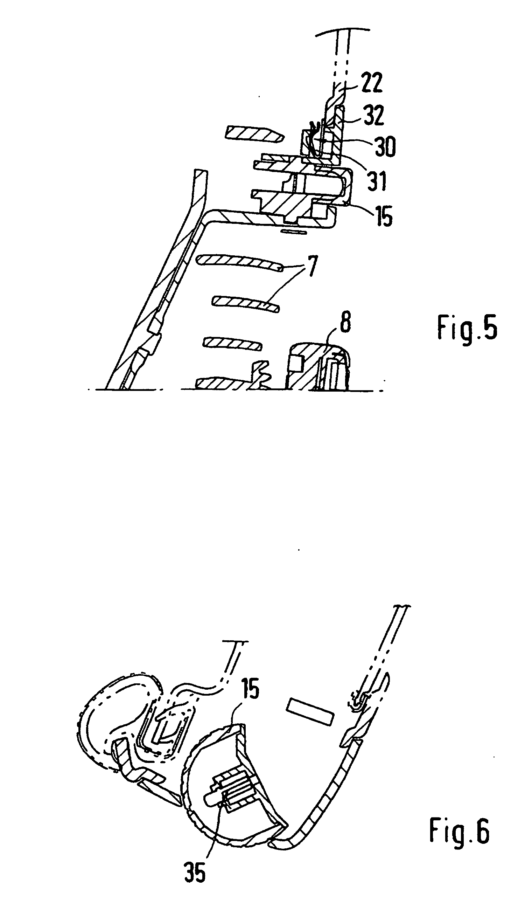

- Fig. 5: einen Vertikalschnitt durch die Einrichtung nach der Linie V-V der Fig. 1,
- Fig. 6: einen Horizontalschnitt durch die Einrichtung nach der Linie VI-VI der Fig. 1,
- Fig. 7: einen Horizontalschnitt durch das in die Verkleidung der Säule eingesetzte Gehäuse der Einrichtung,
- Fig. 8: einen Horizontalschnitt durch das eingesetzte Gehäuse der Einrichtung mit unterschiedlich dargestellten Stellungen der Luftleitlamellen nach der Linie VIII-VIII der Fig. 1 und
- Fig. 9: einen Horizontalschnitt durch das Gehäuse mit Luftklappe und horizontal angestellten Luftleitlamellen.

Die Luftausströmeinrichtung 1 umfaßt im wesentlichen ein Gehäuse 2, das einen vertikal ausgerichteten Luftleitkanal bildet, der sich aus einem ersten unteren Kanalabschnitt 3 und einem zweiten anschließenden oberen Kanalabschnitt 4 zusammensetzt.

Innerhalb des Gehäuses 2 ist im ersten Kanalabschnitt 3 eine Verstellklappe 5 und im zweiten Kanalabschnitt sind die vertikalen und horizontalen Luftleitlamellen 6, 6a und 7 in verschiedenen Stellungen einstellbar angeordnet, wobei die Luftleitlamelle 6b feststehend ist.

Die vertikal angestellten Luftleitlamellen 6, 6a bestehen aus einer ersten Lamelleneinheit L1, die in einer senkrechten Querebene X-X und einer weiteren Lamelleneinheit L2, die etwa in einer senkrechten Längsebene Y-Y des Fahrzeugs angeordnet sind. Eine Verstellung dieser Lamelleneinheiten L1 und L2 erfolgt mittels eines Stellelements 8, das auf einer Luftleitlamelle 6 sitzt.

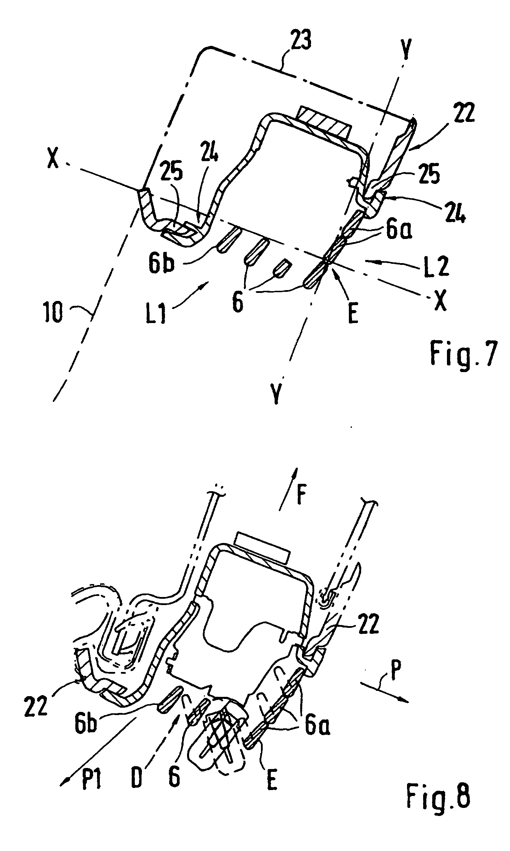

Die Lamelleneinheiten L1 und L2 (Fig. 7) mit den Lamellen 6 und 6a nehmen eine Öffnungs- und Schließstellung D und E sowie eine oder mehrere Zwischenstellungen hierzu ein. In der Öffnungsstellung D sind die Lamellen 6, 6a mit gestrichelten Linien und in der Schließstellung E mit durchgezogenen Linien gezeichnet (Fig. 8).

Wie in Fig. 7 näher gezeigt, sind in der Schließstellung E die Lamellen 6a der Einheit L2 alle geschlossen, das heißt, die Luftströmung quer zum Innenraum in Pfeilrichtung P des Fahrzeugs ist abgesperrt. Dagegen sind die Lamellen 6 der Einheit L1 alle geöffnet. Entsprechende Zwischenstellungen der Lamellen 6 und 6a sind möglich.

Die Lamelle 6b ist feststehend im Gehäuse 2 angeordnet, das heißt, unabhängig von den Verstellungen der übrigen Lamellen 6 und 6a steht diese immer in einer geöffneten Stellung, wodurch ein Luftstrom in Pfeilrichtung Plein Seitenfenster 10 des Fahrzeugs ständig bestreichen kann.

Die senkrecht angestellten Luftleitlamellen 6 und 6a werden wie auch die waagrechten Luftleitlamellen 7 über das Stellelement 8 eingestellt.

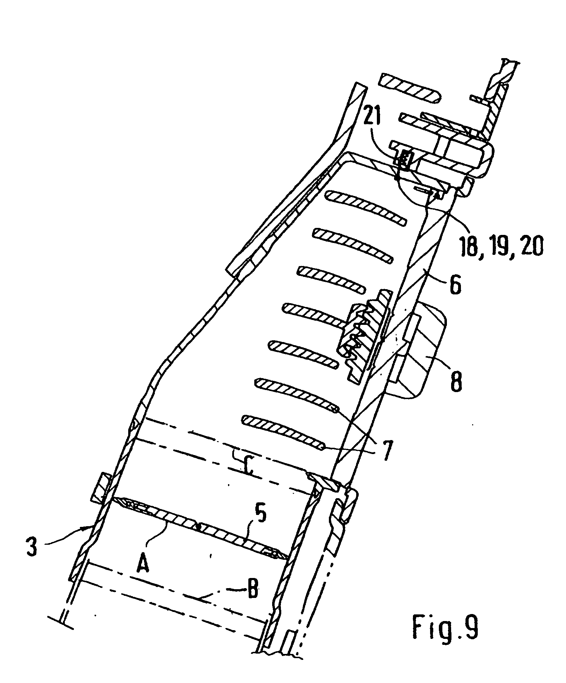

Die Verstellklappe 5 im unteren Kanal 3 wird über einen Umlenkbügel 11 betätigt. Dieser ist an der Rückseite des Gehäuses 2 um eine Lagerachse 12 schwenkbar. Mit der Klappe 5 ist der Umlenkbügel 11 mittels eines Gabelstückes 13 auf einem Zapfen 14 des Bedienelements 15 gehalten, so daß bei einer Verdrehung dieses Elements 15 der Umlenkbügel 11 verschwenkt wird. Mittels einer Verbindung mit der Klappe 5 über eine Kurbel 16 und über eine Schwenkachse 17 an der Klappe 5, ist diese in eine Öffnungsund Schließstellung A und B sowie in eine Zwischenstellung C einstellbar. Diese Stellungen A, B und C sind Raststellungen, die über eine in Nuten 18, 19 und 20 mittels einer Feder vorgespannte Hülse 21 gebildet werden (Fig. 9).

Zur Befestigung des Gehäuses 2 in einer Öffnung eines Verkleidungsteils 22 einer Fahrzeugsäule 23, insbesondere einer B-Säule des Fahrzeugs, sind Rasthaken 24 an vorstehenden Gehäuserändem vorgesehen, die auf Rändern 25 der Verkleidung 22 einklipsbar sind (Fig. 7). Desweiteren ist zum Festsetzen des Gehäuses 2 in der Öffnung der Verkleidung 22 kopfseitig des Gehäuses 2 eine Sperrfeder 30 in eine Gehäuseausnehmung 31 einsetzbar, die zwischen sich und einem Gehäuserand 33 den Rand der Verkleidung 22 klemmend aufnimmt.

Zur Beleuchtung des Bedienelements 15 für die Klappe 5 im Luftkanal ist in diesem eine Leuchtdiode 35 angeordnet, die das Bedienelement 15 von innen her durchscheinend beleuchtet.

## Patentansprüche

1. Luftausströmeinrichtung mit einer Luftzuführung in einen Innenraum eines Kraftfahrzeugs, wobei in einem Gehäuse (2) Luftleitlamellen (6, 6a, 6b, 7) schwenkbar angeordnet und über eine Stelleinrichtung (8, 15) ansteuerbar sind, und das Gehäuse in einem Verkleidungselement (22) befestigbar ist, wobei das Gehäuse (2) einen Luftleitkanal aufweist und der Kanal sich aus einem ersten Kanalabschnitt (3) mit dem Bedienelement (15) um eine Schwenkachse (17) in eine Schließstellung (A), in eine Öffnungsstellung (C) und in eine Zwischenstellung (B) verschwenkbaren Verstellklappe (5) und einen zweiten anschließenden Kanalabschnitt (4) mit den integrierten Luftleitlamellen (6, 6a, 6b, 7) zusammensetzt und die Verstellklappe (5) über einen mit einer Kurbel (16) der Klappe (5) verbundenen und am Gehäuse (2) in einem Lager (12) schwenkbaren Umlenkbügel (11) mittels des Bedienelements (15) betätigbar ist, **dadurch gekennzeichnet, dass** senkrecht angestellte Luftleitlamellen (6, 6a) sich aus in einer senkrechten Fahrzeugquerebene (X-X) angeordneten ersten Lamelleneinheit (L1) und um etwa 90° versetzt hierzu in einer vertikalen Fahrzeuglängsebene (Y-Y) angeordneten zweiten Lamelleneinheit (L2) zusammensetzen und über das Stellelement (8) alle Lamellen (6, 6a) gemeinsam in eine Öffnungsstellung (D) bewegbar sind und in einer Schließstellung (E) die erste Lamelleneinheit (L1) eine Öffnungsstellung (D) und die zweite Lamelleneinheit (L2) eine Schließstellung (E) einnehmen.

2. Luftausströmeinrichtung nach Anspruch 1, **dadurch gekennzeichnet, daß** die erste Lamelleneinheit (L1) eine einzelne feststehende Lamelle (6b) in einer Öffnungsstellung (D) umfaßt, die unmittelbar benachbart einer Gehäusewand der Luftaustrittsöffnung angeordnet ist und bei einer Öffnungs- und Schließstellung (D und E) nicht ansteuerbar ist.

3. Luftausströmeinrichtung nach einem oder mehreren der vorhergehenden Ansprüche, **dadurch gekennzeichnet, daß** das Bedienelement (15) über eine Zapfen/Gabelverbindung (14, 13) mit dem Umlenkbügel (11) verbunden ist und dieser um seine Lagerachse (12) zur Betätigung der Klappe (5) in mindestens drei Stellungen, in eine Öffnungsstellung (C), eine geschlossene Stellung (A) und in eine Mittelstellung (B) verstellbar ist und das Bedienelement (15) zur Fixierung dieser Stellungen (A, B und C) an seiner Unterseite ein federbelastetes Hülsenelement (21) aufweist, das in Rastnuten (18, 19, 20) am Gehäuse (2) entsprechend der Stellungen (A, B, C) klemmend eingreift.

4. Luftausströmeinrichtung nach den Ansprüchen loder 2, **dadurch gekennzeichnet, daß** das Gehäuse (2) zur Befestigung in der Säulenverkleidung (22) an seinen vertikalen Rändern mehrere Rasthaken (24) und im oberen Kopfbereich eine Gehäuseaufnahme (31) für eine Sperrfeder (30) aufweist.

5. Luftausströmeinrichtung nach Anspruch 4, **dadurch gekennzeichnet, daß** die Sperrfeder (30) in der Gehäuseaufnahme (31) eingeklemmt gehalten ist und einen Randabschnitt der Säulenverkleidung (22) zwischen sich und einer Gehäusewand (32) aufnimmt.

6. Luftausströmeinrichtung nach einem oder mehreren der vorhergehenden Ansprüche, **dadurch gekennzeichnet, daß** in der Lagerachse des Bedienelements (15) eine Aufnahme für eine Leuchtdiode (35) vorgesehen ist, die eine Lichtstrahl von innen nach außen auf das Bedienelement (15) bewirkt.

## Claims

1. An air-outflow device with an air-supply into an interior of a motor vehicle, wherein air-guide plates (6, 6a, 6b, 7) are arranged in a pivotable manner in a housing (2) and can be controlled by way of a setting device (8, 15), and the housing can be fastened in a covering element (22), wherein the housing (2) has an air-guide duct and the duct is formed by a first duct portion (3) [with an] adjustment valve (5) pivotable about a pivot axis (17) into a closed position (A), into an open position **(C)** and into an intermediate position **(B)** with the operating element (15) and a second adjoining duct portion (4) with the air-guide plates (6, 6a, 6b, 7) incorporated, and the adjustment valve (5) can be actuated by means of the operating element (15) by way of a reversing yoke (11) connected to a crank (16) of the valve (5) and pivotable in a bearing (12) on the housing (2), **characterized in that** air-guide plates (6, 6a) set vertically are formed by [a] first plate unit (**L1**) arranged in a vertical transverse plane (**X-X**) of the vehicle and [a] second plate unit (**L2**) arranged offset by approximately 90° to the latter in a vertical longitudinal plane (**Y-Y**) of the vehicle, and all the plates (6, 6a) are jointly movable into an open position (**D**) by way of the setting element (8), and in a closed position (**E**) the first plate unit (**L1**) occupies an open position (**D**) and the second plate unit (**L2**) occupies a closed position (**E**).

2. An air-outflow device according to Claim 1, **characterized in that** the first plate unit (**L1**) comprises a single fixed plate (6b) in an open position (**D**), which is arranged directly adjacent to a housing wall of the air-outflow device and cannot be actuated in an open and closed position (**D** and **E**).

3. An air-outflow device according to one or more of the preceding Claims, **characterized in that** the operating element (15) is connected by way of a pin / fork connexion (14, 13) to the reversing yoke (11), and in order to actuate the valve (5) the said reversing yoke (11) can be shifted about its bearing axle (12) into at least three positions, into an open position (C), into a closed position (**A**) and into a middle position (**B**), and in order to fix the said positions (**A**, **B** and **C**) the underside of the operating element (15) comprises a spring-loaded sleeve element (21) which engages in a clamping manner in catch grooves (18, 19, 20) on the housing (2) in accordance with the positions (**A**, **B**, **C**).

4. An air-outflow device according to Claims 1 or 2, **characterized in that** for fastening in the pillar covering (22) the housing (2) has a plurality of catch hooks (24) on its vertical edges and a housing receiving means (31) for a retaining spring (30) in the upper head region.

5. An air-outflow device according to Claim 4, **characterized in that** the retaining spring (30) is held clamped in the housing receiving means (31) and receives an edge portion of the pillar covering (22) between it and a housing wall (32).

6. An air-outflow device according to one or more of the preceding Claims, **characterized in that** a receiving means for a light-emitting diode (35), which generates a light beam from the inside outwards onto the operating element (15), is provided in the bearing axle of the operating element (15).

## Revendications

1. Dispositif de sortie d'air comportant une amenée d'air dans un habitacle d'un véhicule automobile, des lamelles de guidage (6, 6a, 6b, 7) étant disposées pivotantes dans un boîtier (2) et commandables par un dispositif de réglage (8, 15), et le boîtier pouvant être fixé dans un élément d'habillage (22), le boîtier (2) comportant un canal de guidage d'air et le canal se composant d'un premier tronçon de canal (3) avec un clapet de réglage (5) pouvant pivoter, au moyen d'un élément de commande (15), autour d'un axe de pivotement (17), dans une position de fermeture (A), dans une position d'ouverture (C) et dans une position intermédiaire (B), ainsi que d'un deuxième tronçon de canal (4) s'y raccordant avec les lamelles de guidage d'air (6, 6a, 6b, 7) intégrées, et le clapet de réglage (5) peut être actionné au moyen de l'élément de commande (15) par un étrier de renvoi (11) relié à une manette (16) du clapet (5) et pouvant pivoter sur le boîtier (2) dans un palier (12), **caractérisé en ce que** des lamelles de guidage d'air (6, 6a) placées verticalement se composent d'une première unité de lamelles (L1) disposée dans un plan transversal vertical (X-X) du véhicule et d'une deuxième unité de lamelles (L2) disposée décalée d'environ 90° par rapport à la première, dans un plan longitudinal vertical (Y-Y) du véhicule, et toutes les lamelles (6, 6a) sont déplaçables ensemble, par l'élément de réglage (8), dans une position d'ouverture (D) et, dans une position de fermeture (E), la première unité de lamelles (L1) prend une position d'ouverture (D) et la deuxième unité de lamelles (L2) une position de fermeture (E).

2. Dispositif de sortie d'air selon la revendication 1, **caractérisé en ce que** la première unité de lamelles (L1) comprend une seule lamelle (6b) fixe dans une position d'ouverture (D), qui est disposée immédiatement au voisinage d'une paroi du boîtier de l'ouverture de sortie d'air, et qui ne peut être commandée en position d'ouverture (D) ni en position de fermeture (E).

3. Dispositif de sortie d'air selon une ou plusieurs des revendications précédentes, **caractérisé en ce que** l'élément de commande (15) est relié, par une liaison à tige/fourche (14, 13) à l'étrier de renvoi (11), et celui-ci est déplaçable autour de son axe de palier (12) pour l'actionnement du clapet (5) dans au moins trois positions, une position d'ouverture (C), une position fermée (A) et une position médiane (B), et l'élément de commande (15) présente, pour la fixation de ces positions (A, B, C), sur sa face inférieure, un élément de douille (21) soumis à l'action d'un ressort qui s'engage avec serrage dans des rainures d'encliquetage (18, 19, 20) du boîtier (2), suivant les positions (A, B, C).

4. Dispositif de sortie d'air selon les revendications 1 ou 2, **caractérisé en ce que** le boîtier (2) présente, pour sa fixation dans l'habillage de montant (22), sur ses bords verticaux, plusieurs crochets d'encliquetage (24) et, dans la zone de tête supérieure, un logement de boîtier (31) pour un ressort de blocage (30).

5. Dispositif de sortie d'air selon la revendication 4, **caractérisé en ce que** le ressort de blocage (30) est maintenu serré dans le logement de boîtier (31) et reçoit une partie de bordure de l'habillage de montant (22) entre lui et une paroi de boîtier (32).

6. Dispositif de sortie d'air selon une ou plusieurs des revendications précédentes, **caractérisé en ce que** l'axe de palier de l'élément de commande (15) est prévu un logement pour une diode luminescente (35) qui provoque un rayon lumineux de l'intérieur vers l'extérieur sur l'élément de commande (15).
